# EUROPÄISCHE PATENTSCHRIFT

(11) **EP 2 114 659 B1**
(45) Veröffentlichungstag und Bekanntmachung des Hinweises auf die Patenterteilung: **16.02.2011**
(21) Anmeldenummer: 07847045.7
(22) Anmeldetag: 10.12.2007
(51) Int. Cl.: B29C 65/56, B01J 19/32, F28F 25/08, B29C 65/60

(54) **FÜLLKÖRPER**
FILLING BODY
MATÉRIAU DE REMPLISSAGE

(30) Priorität: 22.12.2006 DE 102006061043
(43) Veröffentlichungstag der Anmeldung: 11.11.2009
(73) Patentinhaber: GEA 2H Water Technologies GmbH, 48493 Wettringen (DE)
(72) Erfinder: WOICKE, Nina, 52062 Aachen (DE)
(74) Vertreter: Hess, Peter K. G.
(86) Internationale Anmeldenummer: PCT/EP2007/010748
(87) Internationale Veröffentlichungsnummer: WO 2008/077474

(56) Entgegenhaltungen:
- EP-A- 0 293 003
- GB-A- 945 110
- US-A- 3 798 299
- US-A- 4 395 448
- US-B1- 6 544 628

## Beschreibung

### 1. Technisches Gebiet

Die vorliegende Erfindung bezieht sich auf die Verbindung von gewellten Kunststofffolien zu Füllkörpern, die unter anderem zur Abkühlung von Wasser in Kühltürmen Verwendung finden.

### 2. Stand der Technik

Füllkörper werden in vielfältigen Anwendungen eingesetzt, bei denen eine Flüssigkeit und ein Gas miteinander in Kontakt gebracht werden sollen. Dabei ist es wichtig, dass der Füllkörper eine möglichst große Austauschfläche zwischen Gas und Flüssigkeit bereitstellt. Eine solche Austauschfläche kann beispielsweise für den Wärmeübergang in Nasskühltürmen genutzt werden.

GB-945110A und US 3 798 299 zeigen den nächskommenten Stand der Technik.

Füllkörper werden oft aus vielen Einzellagen von gewellten Kunststofffolien aufgebaut. Durch die Wellung der Kunststofffolien entstehen zwischen zwei nebeneinander liegenden Kunststofffolien Kanäle, durch die die Flüssigkeit und das Gas geleitet werden können. Abhängig von der Ausrichtung der Einzellagen zueinander können die Stromrichtungen von Flüssigkeit und Gas gleichsinnig, gegensinnig oder unter einem Winkel zueinander gerichtet sein. Ein wichtiger Leistungsparameter ist in solchen Anwendungen der Druckverlust, den das Gas beim Durchströmen des Füllkörpers erfährt.

Es gibt mittlerweile viele unterschiedliche Formen von gewellten Folien, die zum Aufbau eines Füllkörpers eingesetzt werden können. Die Formänderungen betreffen unter anderem Fragestellungen einer hohen spezifischen Oberfläche, eines niedrigen Druckverlustes, einer hohen Turbulenz der flüssigen Phase und eine niedrige Verschmutzungsrate des Füllkörpers.

Der Fügeprozess der Einzelfolien zu einem Füllkörper kann auf sehr unterschiedliche Weisen durchgeführt werden. Ein im Stand der Technik übliches Verfahren ist das Kleben. Dieses Verfahren hat den bedeutenden Nachteil, dass ein weiterer Werkstoff in den Verbund gebracht wird, was zu möglicherweise negativen Konsequenzen für die Gesamteigenschaften des Füllkörpers führen kann, z. B. seine Brandeigenschaften oder seine chemische Resistenz. Ein Klebstoff hat außerdem in der Regel vor der Verarbeitung eine sehr begrenzte Einsatzdauer und kann oft nur in einem bestimmten Milieu (Feuchtigkeit, Temperatur) aufgebracht werden.

Ein weiteres vorbekanntes Verfahren ist das thermische Punktschweißen. Dieses Verfahren hat den Nachteil, dass es sehr energieintensiv ist. Außerdem müssen Schweißverfahren mit einem hohen Aufwand betrieben werden, weil die Wärme nicht über den Schweißpunkt hinaus appliziert werden darf. In einem solchen Fall könnte es zu deutlichen Verformungen der Folie kommen, die die oben genannten Anwendungen des Füllkörpers nachhaltig negativ beeinflussen.

Eine weitere Möglichkeit zum Zusammenfügen der Kunststofffolien besteht in mechanischen Verbindungstechnologien. Eine übliche mechanische Verbindung ist die so genannte Schnappverbindung, für die Hinterschnitte in die Folie eingebracht werden müssen. Derart hinterschnittene Folien haben aber den gravierenden Nachteil, dass sie sich nicht gut stapeln lassen. Da aber die Folien vor der Verbindung platzsparend gelagert bzw. transportiert werden müssen, haben hinterschnittene Folien sich im Stand der Technik nicht durchsetzen können.

Das US-Patent 6,544,628 schlägt ein weiteres Konzept zum Verbinden von zwei Kunststofffolien vor. Hier werden die Folien durch eine Anzahl von Formschluss-Verbindungen verbunden. Bei der Formschluss-Verbindung gemäß diesem US-Patent sind zwei becherförmige Verformungen miteinander verbunden, ein positiver Vorsprung in der Oberseite der unteren gewellten Folie und eine komplementäre negative Form an der Unterseite der oberen gewellten Folie. Die so entstandene becherförmige Verbindung wird dann durch das Applizieren von Kräften so verformt, dass ein Verhaken der Form (Formschluss) entsteht. Bei dieser vorbekannten Technik werden zunächst zwei Folien durch solche Formschluss-Verbindungen verbunden. Die entstandenen Folienpaare werden dann ausschließlich an den Rändern miteinander verbunden, da viele Verbindungen im Inneren zwischen den beiden Folienpaaren für die mechanischen Verbindungswerkzeuge nicht zugänglich sind. Bei diesem Verfahren bleibt demnach eine nicht unerhebliche Anzahl von becherartigen Verformungen unverbunden. Solche nicht verformten becherartigen Verbindungen ragen in die entsprechenden Kanäle, die sich zwischen zwei Folien befinden, hinein und erhöhen durch den reduzierten Kanalquerschnitt den Druckverlust des durchströmenden Gases. Außerdem erhöht sich für die Kanäle mit einem verringerten Querschnitt die Verschmutzungsgefahr und damit das Risiko eines vollständigen Zusetzens, was wiederum die Funktion des Füllkörpers zerstört. Außerdem tragen diese unverformten becherartigen Verbindungen praktisch nichts zur Gesamtstabilität des Füllkörpers bei.

Die vorliegende Erfindung löst mithin das technische Problem, ein Verfahren zum Verbinden von Kunststofffolien bereitzustellen, das die geschilderten Schwierigkeiten beseitigt.

Ein weiteres Ziel der vorliegenden Erfindung ist es, Formschlussverbindungen zwischen den Kunststofffolien effizienter und kostengünstiger zu erzeugen.

### 3. Zusammenfassung der Erfindung

Dieses Problem wird durch ein Verfahren nach Anspruch 1, einen Füllhörper nach Anspruch 4.

Weitere bevorzugte Ausführungsformen der Erfindung werden in den abhängigen Patentansprüchen beschrieben.

### 4. Kurze Beschreibung der Zeichnung

In den Zeichnungen werden besonders bevorzugte Ausführungsformen der vorliegenden Erfindung dargestellt. Es zeigt:
- Fig. 1:: eine schematische Darstellung des Aufbaus eines Füllkörpers aus einzelnen gewellten Kunststofffolien.
- Fig. 2:: eine schematische Darstellung zum Erzeugen von Vorsprüngen in den Kunststofffolien mittels Kaltverformung.
- Fig. 3:: eine schematische Darstellung der Erzeugung von Formschluss- Verbindungen in einer Ausführungsform der Erfindung.
- Fig. 4:: eine schematische Darstellung einer Ausführungsform der Kappe- Loch-Verbindung gemäß der Erfindung.
- Fig. 5:: eine schematische Darstellung zu einer alternativen Ausführungs- form der Kappe-Loch-Verbindung gemäß der Erfindung.
- Fig. 5a:: eine schematische Darstellung eines Ein-Schritt-Verfahrens zur Erzeugung einer Formschlussverbindung.
- Fig. 6:: eine schematische Querschnittsdarstellung der Anordnung von Kappen und Löchern an benachbarten Kunststofffolien gemäß ei- ner Ausführungsform der Erfindung.
- Fig. 7:: zeigt ein geöffnetes Futteral, welches zum Ausrichten von zwei zu verbindenden Folien zueinander dient.

### 5. Detaillierte Beschreibung von bevorzugten Ausführungsformen

Im Folgenden werden gegenwärtig bevorzugte Ausführungsbeispiele der vorliegenden Erfindung beschrieben.

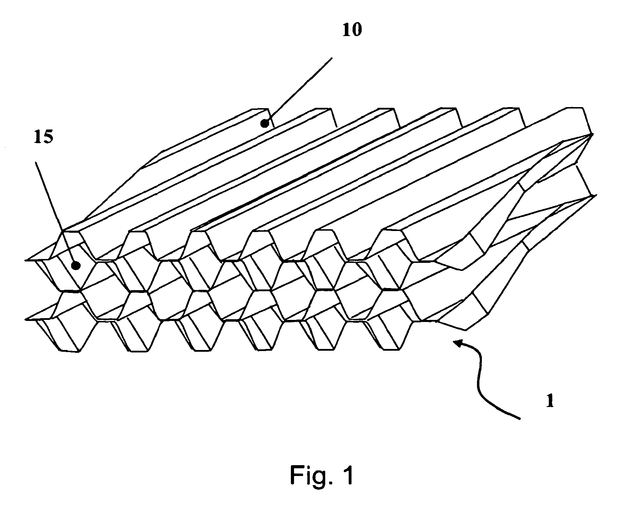

Fig. 1 zeigt schematisch den Aufbau eines erfindungsgemäßen Füllkörpers 1, welcher aus vier gewellten Kunststofffolien 10 besteht. Es versteht sich, dass ein erfindungsgemäßer Füllkörper im Allgemeinen aus wesentlich mehr (oder auch weniger) Lagen bestehen kann. Gleichfalls kann auch eine gewellte Kunststofffolie 10 wesentlich mehr Wellenzüge, d.h. aufeinanderfolgende Berge und Täler, besitzen als in Fig. 1 dargestellt.

Die spezielle Form der gewellten Kunststofffolie 10 spielt für die vorliegende Erfindung keine größere Rolle. Dementsprechend sind auch andere Formen der Wellung als die in Fig. 1 gezeigte denkbar.

Wie in Fig. 1 zu sehen ist, werden durch jeweils zwei benachbarte Kunststofffolien 10 eine Anzahl von Kanälen 15 definiert, durch die die Flüssigkeit bzw. das Gas geleitet werden kann, für welche der Füllkörper konstruiert ist. Dabei können zwei Kunststofffolien 10 so verbunden werden, dass ihre Wellungen in der gleichen Richtung verlaufen, was zu besonders großen Kanälen dazwischen führt. Dies ist bei manchen Anwendungen erwünscht. Es können aber die Kunststofffolien 10 auch lagenweise gegeneinander verdreht sein, was zu einem unregelmäßigen Kanalmuster und damit zu besonders turbulenten Strömungen führt, was ebenfalls je nach Anwendung erwünscht sein kann.

Die Kunststofffolien 10 können grundsätzlich aus beliebigen thermoplastischen Kunststoffen bestehen. Es können ihnen darüber hinaus Additive, Füllstoffe oder Verstärkungsstoffe zugegeben sein, um ihre Eigenschaften zu verändern. Die Kunststofffolien können auch durch verschiedene Herstellungsprozesse erstellt worden sein, die beispielweise Thermoformen, Heißpressen und Extrusion einschließen. Gegenwärtig besonders bevorzugte Kunststoffe sind Polyvinylchlorid, Polyvinylidenfluorid und Polypropylen.

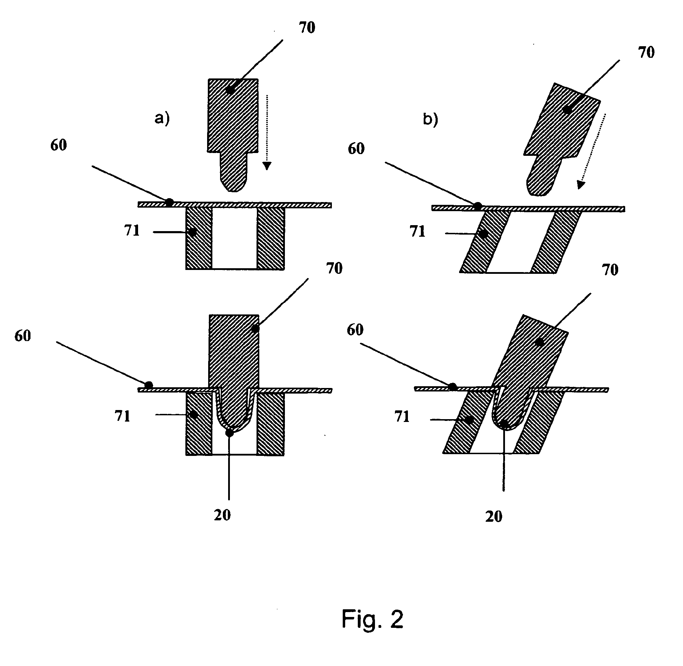

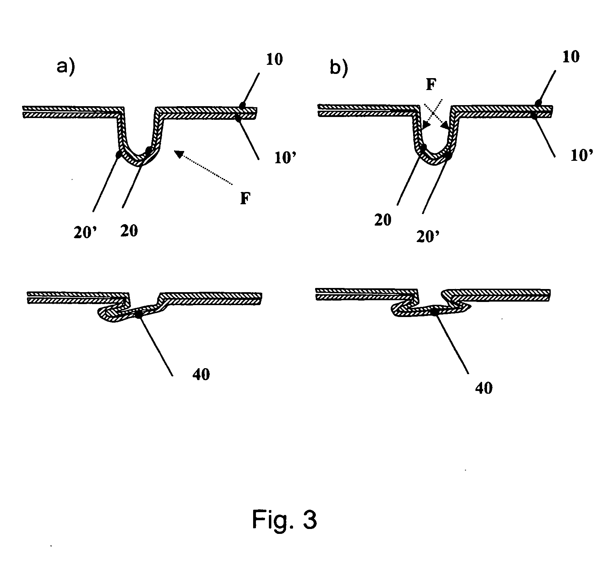

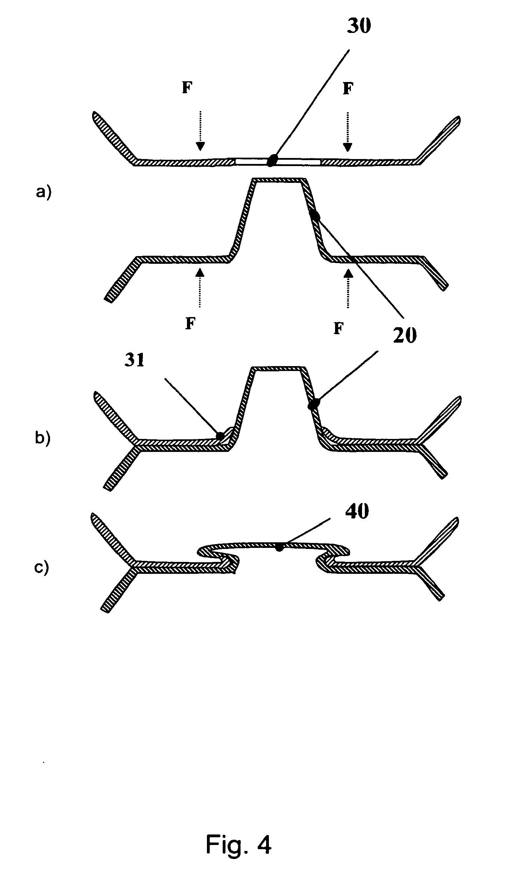

In Fig. 2 ist schematisch die erfindungsgemäße Kaltverformung gemäß einer Ausführungsform der Erfindung dargestellt. Hierbei werden in den Kunststofffolien Vorsprünge 20 erzeugt. Aus diesen Vorsprüngen 20 werden dann im weiteren Verlauf Formschluss-Verbindungen zwischen zwei Kunststofffolien erzeugt (siehe Fig. 3 und Fig. 4). Damit eine Kaltverformung durchgeführt werden kann, muss das Material der Kunststofffolie zähe Eigenschaften bei der Kaltverformung besitzen.

Bei der Kaltverformung wird gemäß Fig. 2 auf der einen Seite des Kunststoff-Materials 60 eine Positivform 70 verwendet und auf der anderen Seite des Kunststoff-Materials 60 eine Negativform 71. Die Negativform 71 ist dabei im Innern größer als die Positivform 70. Durch das Aufbringen einer Kraft ohne zusätzliche thermische Energie werden Positivform und Negativform ineinander geschoben und damit das dazwischen liegende Kunststoff-Material 60 entsprechend der Form der Positivform 70 zu einem Vorsprung 20 verformt, wie in Fig. 2 zu sehen ist. Es ist natürlich auch denkbar, dass die Negativform 71 die Form des Vorsprungs 20 bestimmt. Das dazwischen liegende Kunststoff-Material 60 kann entweder aus einer Kunststofffolie oder aus zwei Kunststofffolien bestehen, die dann gleichzeitig bearbeitet werden.

Im Teil a) von Fig. 2 verformt die Positivform 70 das Kunststoff-Material 60 im rechten Winkel zur Oberfläche des Materials. Im Gegensatz dazu werden im Teil b) von Fig. 2 Positivform 70 und Negativform unter einem flacheren Winkel zur Oberfläche des Kunststoff-Materials 60 geführt. Der bei diesem Schema resultierende Vorsprung 20 ist unsymmetrisch geformt, was gegebenenfalls vorteilhaft für die Stabilität einer Verbindung mit einem solchen Vorsprung ist.

Für die Abfolge zwischen dem Kaltverformungsprozesses und dem Verbinden der Kunststofffolien gibt es zwei Möglichkeiten: Bei der ersten Möglichkeit wird der Kaltverformungsprozess an einzelnen Kunststofffolien durchgeführt. Danach werden zwei Kunststofffolien zu einem Kunststofffolien-Paar verbunden. Bei der zweiten Möglichkeit werden die beiden Kunststofffolien zunächst zusammengelegt und danach wird der Kaltverformungsprozess an beiden Folien zusammen durchgeführt. Hierbei muss Sorge getragen werden, dass die Folien während des Kaltverformungsprozess zueinander fixiert bleiben, so dass sie nicht verrutschen können. Dies kann durch einen Rahmen oder durch Fixierpunkte, die durch Formanpassung der Folien entstehen, erreicht werden.

Eine Verbindung von zwei Kunststofffolien wird gemäß der vorliegenden Erfindung durch Verbindungselemente durchgeführt. Ein Beispiel für Verbindungselemente sind die in Fig. 3 gezeigten Vorsprünge 20, 20'. Die Verbindung wird hierbei folgendermaßen bewerkstelligt: Zunächst werden Vorsprünge 20, 20' einer oberen Kunststofffolie 10 und einer unteren Kunststofffolie 10' ineinandergefügt (ähnlich dem Ineinanderstapeln von zwei Bechern). Eine solches Zusammenfügen der Vorsprünge 20, 20' ist jeweils in den beiden oberen Teilen von Fig. 3 zu sehen. Diese Zusammenfügung von zwei Vorsprüngen stellt noch keine sehr feste Verbindung dar, da hier nur Reibungskräfte zwischen den beiden Vorsprüngen wirken. Eine Verbindung wird vielmehr durch eine Verformung (Deformierung) der Vorsprünge erreicht, wie sie den in beiden unteren Teilen von Fig. 3 zu sehen ist. Diese Verbindungsart wird als Formschluss-Verbindung 40 bezeichnet, da die deformierte Zusammenfügung der beiden Vorsprünge einen hohen Widerstand gegen das Lösen der beiden Kunststofffolien bietet, zu denen die Vorsprünge jeweils gehören. Dabei gibt es verschiedene Möglichkeiten der Verformung.

Im Teil a) von Fig. 3 wird die Verformungskraft dezentral gegen die beiden Vorsprünge 20, 20' ausgeübt, wie dem mit F bezeichneten Kraft-Pfeil zu entnehmen ist. Eine solche Verformung führt zu einer deutlich unsymmetrischen Formschluss-Verbindung 40. Dagegen wird im Teil b) von Fig. 3 die Verformungskraft von innen gegen die beiden Vorsprünge 20, 20' ausgeübt (siehe die beiden Kraft-Pfeile F), was zu einer relativ symmetrischen Formschluss-Verbindung 40 führt. Es versteht sich, dass neben diesen beiden Beispielen noch weitere Arten zur Erzeugung von Formschluss-Verbindungen möglich sind.

Eine andere Möglichkeit zur Erzeugung von Formschluss-Verbindungen ist in Fig. 4 dargestellt, wobei mit dieser Ausführungsform der Erfindung ebenfalls zwei Kunststofffolien verbunden werden sollen. Allerdings werden hier als Verbindungselemente jeweils ein Vorsprung 20 und ein Loch 30 verwendet.

Auf der unteren Kunststofffolie befindet sich ein Vorsprung 20, auf der oberen Kunststofffolie ist ein Loch 30 ausgebildet. Beim Zusammenfügen der Folien ergibt sich, dass jeweils ein Vorsprung einem Loch gegenüberliegt (siehe Teil a von Fig. 4).

Die Vorsprünge 20 sind bei dieser Verbindungsart so geformt, dass sie eine größere Grundfläche in der Nähe der Kunststofffolie haben als am oberen Ende. Im Falle einer runden Querschnitts ist ein solcher speziell geformter Vorsprung konisch. Ein solch speziell geformter Vorsprung wird im Folgenden Kappe genannt.

Ein Loch 30 hat die gleiche Form wie die entsprechende Kappe 20 in ihrer Projektion auf die Folienoberfläche. Die Lochgröße ist aber kleiner als diese Projektion und größer als ein Querschnitt durch das obere Ende der Kappe.

Im Teil a) von Fig. 4 werden Kappe 20 und Loch 30 zusammengeschoben, wie an den 4 Kraftpfeilen F zu sehen ist. Der zusammengefügte Zustand von Kappe 20 und Loch 30 ist im Teil b) von Fig. 4 zu sehen. Wegen der oben erwähnten Bedingungen an die Form und die Abmessungen von Kappe und Loch resultiert aus dem Zusammenfügen von Kappe 20 und Loch 30 eine gewisse Klemmkraft, die die beiden Kunststofffolien bereits zusammenhält. Dies ist im Teil b) von Fig. 4 daran zu sehen, dass der Rand 31 des Lochs 30 leicht angehoben ist. In Teil c) von Fig. 4 ist schließlich die Formschluss-Verbindung für die Kappe-Loch-Einheit zu sehen, die sich nach der Verformung der Kappe ergibt.

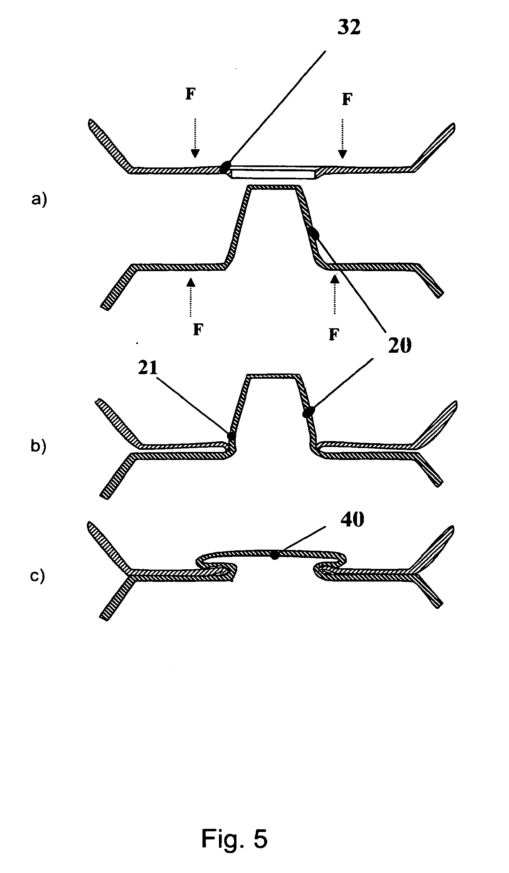

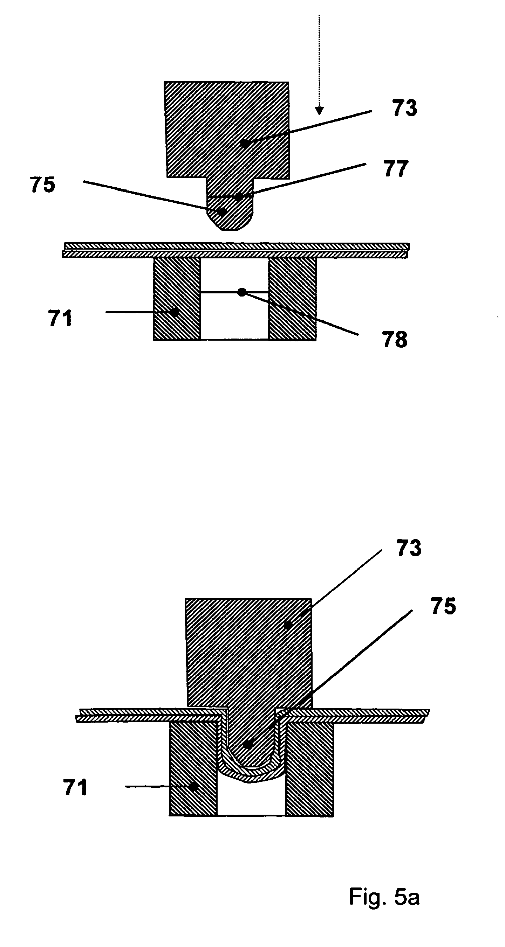

Eine weitere und besonders praktische Art, Formschlussverbindungen zu erzeugen, ist in Figur 5a zu sehen. Im oberen Teil dieser Figur sind - ähnlich wie im linken Teil von Fig. 2 - eine Positivform und eine Negativform 71 zu sehen, zwischen denen sich zwei zusammengelegte Kunststofffolien befinden. Die Positivform umfasst einen Sockel 73 und einen Stift 75. Der Stift 75 ist hat in diesem Beispiel einen zylinderförmigen Querschnitt und ist an der Spitze abgerundet in der Form einer Halbkugel. Es sind aber auch andere Formen für den Stift denkbar. Wie durch den Pfeil angedeutet, wird die Positivform in Richtung auf die Negativform 71 bewegt. Im unteren Teil von Figur 5a befindet sich der Stift 75 in der Öffnung der Negativform 71. Die beiden Kunststofffolien sind durch die Krafteinwirkung des Stiftes 75 jeweils zu einer Ausstülpung kaltverformt worden, deren Form derjenigen des Stiftes 75 entspricht.

Wichtig ist für dieses Verfahren, dass der Durchmesser 77 des Stiftes 75 (mit zylinderförmigem Querschnitt) nicht viel kleiner als der Durchmesser 78 der kreisförmigen Öffnung der Negativform 71 ist (siehe oberer Teil von Figur 5b). Dann nämlich entsteht mit der Kaltverformung der Kunststofffolien gleichzeitig eine Formschlussverbindung zwischen ihnen. Denn der geringe Abstand zwischen dem Stift 75 und den Wänden der Öffnung der Negativform sorgt bei entsprechender Kraftausübung mit dem Stift 75 dafür, dass die erzeugten Ausstülpungen sich entsprechend deformieren. Nach dem kräftigen Eindrücken des Stiftes in die Öffnung lassen sich die Folien nur noch unter hohem Kraftaufwand wieder voneinander lösen lassen (Formschlussverbindung). In Versuchen hat es sich gezeigt, dass für eine stabile Formschlussverbindung zwischen dem Stift 75 und der Wand der Negativform 71 im eingedrückten Zustand ein Abstand besteht, der der Dicke von einer halben bis vier Kunststofffolien entspricht. Somit entspricht im oberen Teil der Fig. 5b die Differenz zwischen dem Durchmesser 77 des Stifts 75 und dem Durchmesser 78 der Negativform-Öffnung der Dicke von 1 bis 8 Kunststofffolien.

In bevorzugten Ausführungsformen wurde eine sehr stabile Formschlussverbindung erzeugt, wenn zwischen dem Stift 75 und der Wand der Negativform 71 im eingedrückten Zustand ein Abstand besteht, der der Dicke von ein bis zwei Kunststofffolien entspricht. Es versteht sich, dass Stift 75 und die entsprechende Öffnung nicht eine kreisförmige Umrandung besitzen müssen; sie können auch elliptische oder polygonale Querschnittsflächen etc. haben. Wichtig ist nur das Größenverhältnis von Stift und Öffnung zueinander.

Dieses Verfahren der Erzeugung von Formschlussverbindungen ist ein Ein-Schritt-Verfahren, bei dem Kaltverformung der Kunststofffolien und Formschlussverbindung zusammen erzeugt werden, ohne dass weiteres Werkzeug benötigt wird, um - wie in den vorherigen Beispielen beschrieben - die becherförmigen Verbindungen zu deformieren. Somit ist dieses Verfahren besonders effizient und kostengünstig. Insbesondere können beim Einsatz dieses Ein-Schritt-Verfahrens die gewellten Folien in der Fabrik ohne Verbindungselemente hergestellt werden und in diesem Zustand zur Baustelle gebracht werden. Erst auf der Baustelle werden dann auf den Folien die Verbindungselemente (Ausstülpungen) erzeugt und gleichzeitig über einen Formschluss verbunden. Dies ermöglicht eine besonders große Flexibilität, da erst auf der Baustelle des Füllkörpers entschieden wird, an welchen Stellen die Folien miteinander verbunden werden, so dass besondere Gegebenheiten des speziellen Füllkörpers berücksichtigt werden können.

In Fig. 5 wird eine alternative und besonders vorteilhafte Ausführungsform der erfindungsgemäßen Kappe-Loch-Verbindung gezeigt. Hierbei ist das Loch 30 in der Art modifiziert dass die Ränder des Lochs zusätzlich eine Wölbung 32 aufweisen (siehe Teil a von Fig. 5). Im zusammengefügten Zustand von Kappe und Loch, der im Teil b) von Fig. 5 zu sehen ist, bewirkt diese Wölbung des Lochrandes, dass die Basis 21 der Kappe 20 leicht verformt ist. Dies führt zu einer verbesserten Klemmkraft zwischen Kappe 20 und Loch 30. Im Teil c) von Fig. 5 wird schließlich die resultierende Formschluss-Verbindung für Kappe und Loch bei dieser Ausführungsform der Erfindung dargestellt.

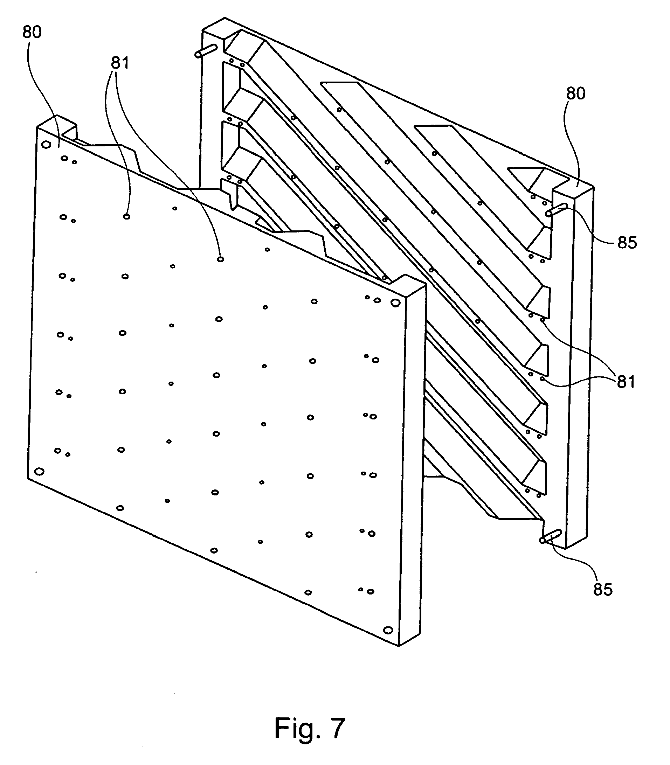

Wichtig beim Verbinden von zwei Kunststofffolien ist es, dass die Folien richtig zueinander ausgerichtet sind und beim Verbindungsvorgang nicht gegeneinander verrutschen. In Fig. 7 ist ein Futteral im geöffneten Zustand zu sehen. Zum Aurichten wird jeweils eine Folie in eine Hälfte 80 des Futterals gelegt. Dazu haben die Innenseiten der beiden Futteral-Hälften 80 eine vorgeprägte Struktur, die an die Größe und Orientierung der Wellenform der verwendeten Kunststofffolien angepasst ist (siehe Fig. 1 für die Wellenform der Kunststofffolien und die beiden Pfeile in Fig. 7 für die Orientierung der vorgeprägten Stuktur im Futteral). Wie in Fig. 7 zu sehen ist, hat die rechte Futteral-Hälfte an ihren vier Ecken Verbindungsstifte 85 und die linke Futteralhälfte entsprechende Löcher (nicht gezeigt). Wenn die Verbindungsstifte 85 in den Löchern platziert werden, sind die beiden Futteral-Hälften 80 rutschfest gegeneinander ausgerichtet. Da die beiden in das Futteral eingelegten Kunststofffolien durch die Innenwände der Futteral-Hälfte 80 sowie durch vorgeprägte Struktur fest gegenüber der Futteral-Hälfte 80 ausgerichtet sind, sind auch die beiden Kunststofffolien zueinander ausgerichtet und gegenüber einem Verrutschen gesichert. Wie gleichfalls Fig. 7 zu entnehmen ist, befindet sich eine Vielzahl von Löchern 81 auf den Futteralhälften 80, wobei ein Loch der einen Futteral-Hälfte einem Loch der anderen Futteral-Hälfte gegenüberliegt, wenn das Futteral geschlossen ist.

Beim oben beschriebenen Ein-Schritt-Verfahren zur Erzeugung von Verbindungen ist die Ausrichtung der Folien besonders wichtig, da hierbei die vorgefertigten Verbindungselemente fehlen, welche eine (geringe) Haftung zwischen den zu verbindenden Folien gewährleisten. Wenn beim Ein-Schritt-Verfahren sich die beiden Folien in dem geschlossenen Futteral befinden, können an den Stellen der Löcher 81 Verbindungen in der oben beschriebenen Weise erzeugt werden. Dazu wird an der einen Außenseite des Futterals eine Negativform (siehe Element 71 in Fig. 5a) platziert und an der anderen Außenseite des Futterals ein Stift (siehe Element 75 in Fig. 5a), woraufhin der Stift in die Negativform hineinbewegt wird und die Verbindung zwischen den Folien an dieser Stelle bewirkt wird.

Aber auch für die Verfahren zur Verbindung von zwei Folien, bei denen die Folien schon zueinander passende, vorgefertigte Verbindungselemente aufweisen (z.B. Vorspruch/Loch oder zwei becherförmige Vorsprünge), ist das Futteral zur Ausrichtung der Folien gut geeignet. Bei diesen Verfahren ist aber darauf zu achten, dass das Muster der Löcher 81 auf dem Futteral, d.h. die Abstände und Größe der Löcher 81, mit den Abständen und Größen der vorgefertigten Verbindungselemente auf den Folien übereinstimmt, damit die Verbindungselemente durch die Löcher 81 des Futterals zugänglich sind und zu einer Formschlussverbindung verformt werden können. Auch bei diesen Verfahren zur Verbindung von zwei Folien verhindert das Futteral ein Verrutschen der Folien beim Verbindungsvorgang.

Außer dem beschriebenen Futteral gibt es auch andere Vorrichtungen, die die zu verbindenden Folien gegeneinander auszurichten und ein Verrutschen verhindern können. Beispielsweise können die zu verbindenden Folien an jeweils zwei gegenüberliegenden Seiten festgehalten oder eingespannt werden. Insbesondere kann beim Aufbau eines Füllkörpers ein Kunststofffolien-Paar, das aus zwei verbundenen Kunststofffolien besteht, mit einem anderen Kunststofffolien-Paar verbunden werden, indem die beiden Kunststofffolien-Paare jeweils an ihren Seitenrändern in eine Festklemm-Vorrichtung eingespannt werden, so dass sie beim Verbindungsvorgang nicht verrutschen können. Weiterhin ist es auch denkbar, dass die Werkzeuge, die die Formschlussverbindungen zwischen den Folien erzeugen, zusätzlich Einrichtungen aufweisen, welche die Folien, die miteinander verbunden werden, ausrichten und festhalten.

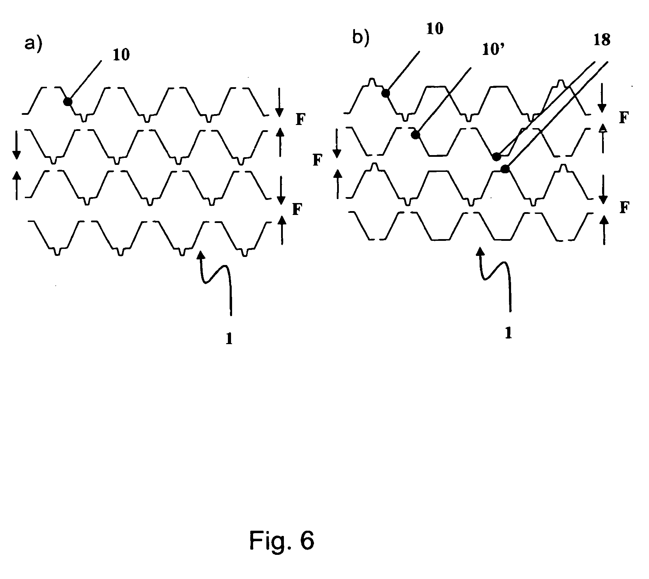

In Fig. 6 sind zwei Beispiele für Verbindungsschemata gemäß einer Ausführungsform vorliegenden Erfindung zu sehen.

Beim Aufbau des Füllkörpers werden zwei Kunststofffolien zu einem Kunststofffolien-Paar verbunden. Hierbei können Formschluss-Verbindungen über die gesamte Fläche der beteiligten Kunststofffolien erzeugt werden. Zwei Kunststofffolien-Paare können dann allerdings nur noch an den Rändern miteinander durch Formschluss verbunden werden, da die Vorsprünge und / oder Löcher im Innern der beiden Folien nicht mehr für das mechanische Werkzeug, welches die Formschluss-Verbindung durchführt, zugänglich sind.

Im Teil a) von Fig. 6 wird der schematische Aufbau eines Füllkörpers 1 aus vier einzelnen Kunststofffolien 10 gemäß einer Ausführungsform der Erfindung gezeigt, wobei eine Querschnittsansicht durch den Füllkörper 1 wiedergegeben ist. In diesem Beispiel werden gleichartige Folien 10 miteinander verbunden, wobei jede Folie 20 ungefähr die gleiche Anzahl von Kappen und Löchern besitzt. Zunächst werden die beiden oberen Kunststofffolien und die beiden unteren Kunststofffolien mit Kappe-Loch-Verbindungen gemäß der Erfindung verbunden (siehe die Pfeilpaare F auf der rechten Seite von Fig. 6a). Danach werden die beiden resultierenden Kunststofffolien-Paare miteinander verbunden (siehe das Pfeilpaar F der der linken Seite von Fig. 6a).

In Teil b) von Fig. 6 wird der schematische Aufbau eines Füllkörpers 1 aus vier einzelnen Kunststofffolien gemäß einer anderen Ausführungsform der Erfindung gezeigt, wobei wieder eine Querschnittsansicht durch den Füllkörper gezeigt wird. In dieser Ausführungsform werden zwei verschiedenartige Kunststofffolien 10, 10' verwendet. Eine Kunststofffolie 10 erster Art (siehe die oberste Folie und die dritte Folie von oben) hat nur Vorsprünge (Kappen) als Verbindungselemente, eine Kunststofffolie 10' zweiter Art (siehe die zweite Folie von oben und die unterste Folie) hat nur Löcher als Verbindungselemente. Bei dem gezeigten Verbindungsschema wird jeweils eine Folie erster Art 10 mit einer Folie zweiter Art 10' verbunden, da die beiden Folienarten alternierend zum Aufbau des Füllkörpers verwendet werden. Demnach werden die Formschluss-Verbindungen an Kappe-Loch-Paaren, wie sie mit Bezug auf die Fig. 4 und 5 beschrieben wurden, durchgeführt.

Entscheidend ist aber noch ein weiteres Merkmal der Ausführungsform aus Fig. 6b. An den Rändern der gezeigten vier Folien (hier in der Querschnittsansicht am linken und rechten Rand) ist die Dichte von angebrachten Verbindungselemente doppelt so hoch wie im Innern der Folien. Beispielsweise besitzt die gewellte Folie 10 an ihrem linken Rand auf einem Berg einen Vorsprung und im darauffolgenden Tal wieder einen Vorsprung, während im Inneren der Folie 10 sich Vorsprünge nur in Tälern befinden (siehe Folie 10 in Fig. 6b). Gleiches gilt für die Anordnung der Löcher auf der Folie 10'. Durch diese erfindungsgemäße Anordnung der Verbindungselemente auf den Folien ist gewährleistet, dass im Wesentlichen keine unverbundenen Verbindungselemente zurückbleiben, nachdem der Füllkörper aus den Kunststofffolien aufgebaut worden ist. Bei dem Aufbau gemäß Fig. 6b werden zunächst zwei unterschiedliche Kunststofffolien 10, 10' zu einem Kunststofffolien-Paar verbunden, wobei auch bei dieser Anordnung der Verbindungselemente über die gesamte Fläche Formschluss-Verbindungen erzeugt werden können. Für das anschließende Verbinden von Kunststofffolien-Paaren bleiben nur an Rändern noch unverbundene Verbindungselemente übrig, die zur Formschluss-Verbindung der Kunststofffolien-Paare zusammengefügt werden können. Damit können im Wesentlichen alle Verbindungselemente der Kunststofffolien zu Formschluss-Verbindungen verbunden werden. Im Innern der Verbindungsfläche zwischen den beiden Kunststofffolien-Paaren bilden sich statt Formschluss-Verbindungen Stützflächen aus, die aus zwei glatten Flächen gebildet werden, die zu einem der beteiligten Kunststofffolien-Paare gehören (siehe die beiden Flächen 18 in Fig. 6b).

## Patentansprüche

1. Verfahren zum Erzeugen einer Formschlussverbindung zwischen zwei Kunststofffolien, aufweisend die folgenden Schritte:
In Kontakt Bringen der beiden Kunststofffolien an einer Kontaktstelle, wobei die Kunststofffolien an der Kontaktstelle im Wesentlichen parallel zueinander verlaufen;
Positionieren einer Negativform mit einer Öffnung in der Nähe der Kontaktstelle der beiden Kunststofffolien; und
Bewegen eines Stiftes von der anderen Seite der sich kontaktierenden Kunststofffolien her in Richtung der Negativform und anschließendes Hineindrücken des Stiftes in die Negativform, so dass die zwischen Negativform und Stift liegenden beiden Kunststofffolien an der Kontaktstelle kaltverformt werden,
wobei im eingedrückten Zustand zwischen dem Stift und der Wand der Negativform ein Abstand besteht, der der Dicke von einer halben bis vier Kunststofffolien entspricht, so dass gleichzeitig mit der Kaltverformung der beiden Kunststofffolien auch eine Formschlussverbindung zwischen den beiden Kunststofffolien entsteht.

2. Verfahren nach Anspruch 1, wobei im eingedrückten Zustand zwischen dem Stift und der Wand der Negativform ein Abstand besteht, der der Dicke von ein bis drei Kunststofffolien entspricht.

3. Verfahren nach Anspruch 1, wobei im eingedrückten Zustand zwischen dem Stift und der Wand der Negativform ein Abstand besteht, der der Dicke von ein bis zwei Kunststofffolien entspricht.

4. Füllkörper, umfassend eine Mehrzahl von Kunststofffolien, die jeweils gewellt sind, wobei eine Kunststofffolie jeweils eine Mehrzahl von Verbindungselementen aufweist, durch die eine Kunststofffolie mit anderen Kunststofffolien durch eine Mehrzahl von Formschluss-Verbindungen verbunden werden kann, wobei der Füllkörper so aufgebaut ist, dass jeweils zwei Kunststofffolien zu einem Kunststofffolien-Paar verbunden werden und Kunststofffolien-Paare jeweils mit anderen Kunststofffolien-Paaren verbunden werden, **dadurch gekennzeichnet, dass** die Verbindungselemente auf den Kunststofffolien so positioniert sind, dass beim Zusammenfügen von zwei Kunststofffolien zu einem Kunststofffolien-Paar die noch unverbundenen Verbindungselemente auf den einander gegenüberliegenden Seiten der beiden Kunststofffolien zu Verbindungselemente-Paaren zusammengefügt werden können, wobei diese Verbindungselemente-Paare über die gesamte Fläche der beiden Folien verteilt sind, und
dass beim Verbinden von zwei Kunststofffolien-Paaren miteinander die noch unverbundenen Verbindungselemente auf den einander gegenüberliegenden Seiten der beiden Kunststofffolien-Paare durch eine Formschlussverbindung zu Verbindungselemente-Paaren zusammengefügt werden können, wobei diese Verbindungselemente-Paare sich ausschließlich in der Nähe der Ränder der beiden Kunststofffolien-Paare befinden,
so dass beim sukzessiven Aufbau des Füllkörpers aus den einzelnen Kunststofffolien im Wesentlichen alle Verbindungselemente, die sich auf den Kunststofffolien befinden, paarweise zu Formschluss-Verbindungen verbunden werden können.

5. Füllkörper nach Anspruch 4, wobei ein Verbindungselemente-Paar, das beim Aufbau des Füllkörpers verbunden wird, jeweils aus einem Vorsprung und einem Loch besteht.

6. Füllkörper nach Anspruch 5, wobei die Löcher auf einer Kunststofffolie von beiden Seiten mit Vorsprüngen von benachbarten Kunststofffolien verbunden werden können.

7. Füllkörper nach Anspruch 5 oder 6, wobei die Ränder der Löcher gewölbt sind.

8. Füllkörper nach einem der Ansprüche 5 - 7, wobei die Vorsprünge eine größere Querschnittsfläche an dem Ende in der Nähe der Kunststofffolie haben als an ihrem anderen Ende.

9. Füllkörper nach einem der Ansprüche 5 - 8, aufweisend zwei Arten von Kunststofffolien, wobei eine Kunststofffolie erster Art deutlich mehr Löcher als Vorsprünge aufweist und wobei eine Kunststofffolie zweiter Art deutlich mehr Vorsprünge als Löcher aufweist.

10. Füllkörper nach einem der Ansprüche 4 - 9, wobei eine Formschluss-Verbindung zwischen paarigen Verbindungselementen durch eine Kraftaufbringung realisiert wird, die dezentral gegen ein an der Formschluss-Verbindung beteiligtes Verbindungselement drückt.

11. Füllkörper nach einem der Ansprüche 4 - 9, wobei eine Formschluss-Verbindung zwischen paarigen Verbindungselementen durch eine Kraftaufbringung realisiert wird, die von innen gegen ein an der Formschluss-Verbindung beteiligtes Verbindungselement drückt.

12. Füllkörper nach einem der Ansprüche 4 - 11, wobei jede der Kunststofffolien aus thermoplastischem Kunststoff besteht.

## Claims

1. Method for generating a positive lock between two plastic sheets, comprising the following steps:
bringing the two plastic sheets into contact at a contact point, wherein the plastic sheets are essentially parallel to each other at the contact point;
positioning a negative mould with an opening near the contact point of the two plastic sheets; and
moving a pin from the other side of the plastic sheets contacting each other in the direction of the negative mould and successive pushing of the pin into the negative mould, such that the two plastic sheets lying between negative mould and pin are cold-formed at the contact point,
wherein in the pressed state a distance corresponding to the thickness of a half to four plastic sheets exists between the pin and the wall of the negative mould, such that also a positive lock between the two plastic sheets is simultaneously generated with the cold-forming of the two plastic sheets.

2. Method according to claim 1, wherein in the pressed state a distance corresponding to the thickness of one to three plastic sheets exists between the pin and the wall of the negative mould.

3. Method according to claim 1, wherein in the pressed state a distance corresponding to the thickness of one to two plastic sheets exists between the pin and the wall of the negative mould.

4. Contact body, comprising a plurality of plastic sheets each being corrugated, wherein each plastic sheet comprises a plurality of connection elements by which a plastic sheet can be connected with other plastic sheets by means of a plurality of positive locks, wherein the contact body is constructed in such a way that each of the plastic sheets is connected with another plastic sheet to a pair of plastic sheets and each pair of plastic sheets is connected with another pair of plastic sheets, **characterized in that** the connection elements are positioned on the plastic sheets in such a way, that when joining two plastic sheets to a pair of plastic sheets, the connection elements which are not yet connected on the surfaces of the two plastic sheets facing each other can be connected to pairs of connection elements, wherein these connection elements are distributed over the whole surface of the two sheets and
that when joining two pairs of plastic sheets with each other, the connection elements which are not yet connected on the surfaces of the two pairs of plastic sheets facing each other can be connected to pairs of connecting elements, wherein these pairs of connecting elements are located only near the edges of the two pairs of plastic sheets,
such that during the successive construction of the contact body out of the single plastic sheets essentially all connection elements which are located on the plastic sheets can be pairwise connected to positive locks.

5. Contact body according to claim 4, wherein a pair of connection elements which is connected during the construction of the contact body consists of a projection and a hole.

6. Contact body according to claim 5, wherein the holes on a plastic sheet can be connected with projections of adjacent plastic sheets from both sides.

7. Contact body according to claim 5 or 6, wherein the edges of the holes are curved.

8. Contact body according to one of claims 5 to 7, wherein the projections have a bigger cross-sectional area at the end near the plastic sheet than at their other end.

9. Contact body according to one of claims 5 to 8, comprising two types of plastic sheets, wherein a plastic sheet of the first type comprises significantly more holes than projections and wherein a plastic sheet of the second type comprises significantly more projections than holes.

10. Contact body according to one of claims 4 to 9, wherein a positive lock is realized between paired connection elements by an application of a force which pushes in a non-central way against a connection element which is involved in the positive lock.

11. Contact body according to one of claims 4 to 9, wherein a positive lock is realized between paired connection elements by an application of a force which pushes against a connection element which is involved in the positive lock from its interior.

12. Contact body according to one of claims 4 to 11, wherein each of the plastic sheets is made out of thermoplastic material.

## Revendications

1. Procédé pour produire une liaison par complémentarité de formes entre deux feuilles en matière plastique, lequel présente les étapes suivantes :
mise en contact des deux feuilles en matière plastique en un point de contact, les feuilles en matière plastique s'étendant sensiblement parallèlement l'une à l'autre au point de contact ;
positionnement d'une forme négative pourvue d'une ouverture à proximité du point de contact des deux feuilles en matière plastique ; et
déplacement d'une broche, depuis l'autre côté des feuilles en matière plastique mises en contact, en direction de la forme négative, puis enfoncement de la broche dans la forme négative, de façon que les deux feuilles en matière plastique situées entre la forme négative et la broche soient déformées à froid au point de contact,
dans lequel procédé il existe, en position enfoncée, un intervalle qui correspond à l'épaisseur d'une demi-feuille à quatre feuilles en matière plastique entre la broche et la paroi de la forme négative, de sorte qu'il se crée, en même temps que la déformation à froid des deux feuilles en matière plastique, une liaison par complémentarité de formes entre les deux feuilles en matière plastique.

2. Procédé selon la revendication 1, dans lequel il existe, en position enfoncée, un intervalle qui correspond à l'épaisseur d'une à trois feuilles en matière plastique entre la broche et la paroi de la forme négative.

3. Procédé selon la revendication 1, dans lequel il existe, en position enfoncée, un intervalle qui correspond à l'épaisseur d'une à deux feuilles en matière plastique entre la broche et la paroi de la forme négative.

4. Corps de remplissage comprenant une pluralité de feuilles en matière plastique qui sont toutes ondulées, chaque feuille en matière plastique comportant une pluralité d'éléments de liaison, par l'intermédiaire desquels une feuille en matière plastique peut être reliée à d'autres feuilles en matière plastique par une pluralité de liaisons par complémentarité de formes, le corps de remplissage étant conçu de façon qu'à chaque fois deux feuilles en matière plastique soient reliées en une paire de feuilles en matière plastique et que chaque paire de feuilles en matière plastique soit reliée à d'autres paires de feuilles en matière plastique, **caractérisé en ce que** les éléments de liaison sont positionnés sur les feuilles en matière plastique de façon que, lors de l'assemblage de deux feuilles en matière plastique en une paire de feuilles en matière plastique, les éléments de liaison non encore reliés puissent être assemblés en paires d'éléments de liaison sur les côtés se faisant face des deux feuilles en matière plastique, ces paires d'éléments de liaison étant réparties sur toute la surface des deux feuilles, et que, lors de la liaison de deux paires de feuilles en matière plastique entre elles, les éléments de liaison non encore reliés puissent être assemblés en paires d'éléments de liaison par une liaison par complémentarité de formes sur les côtés se faisant face des deux feuilles en matière plastique, ces paires d'éléments de liaison se trouvant exclusivement à proximité des bords des deux feuilles en matière plastique, de façon que, lors de la construction progressive du corps de remplissage à partir des feuilles en matière plastique individuelle, sensiblement tous les éléments de liaison qui se trouvent sur les feuilles en matière plastique puissent être reliés par paires en liaisons par complémentarité de formes.

5. Corps de remplissage selon la revendication 4, dans lequel chaque paire d'éléments de liaison, qui est reliée lors de la construction du corps de remplissage, est constituée d'une saillie et d'un trou.

6. Corps de remplissage selon la revendication 5, dans lequel les trous ménagés dans une feuille en matière plastique peuvent être reliés depuis les deux côtés avec des saillies de feuilles en matière plastique voisines.

7. Corps de remplissage selon la revendication 5 ou 6, dans lequel les bords des trous sont bombés.

8. Corps de remplissage selon une des revendications 5 à 7, dans lequel les saillies ont une plus grande surface de section à l'extrémité proche de la feuille en matière plastique qu'à leur autre extrémité.

9. Corps de remplissage selon une des revendications 5 à 8, lequel comporte deux types de feuilles en matière plastique, une feuille en matière plastique d'un premier type comportant beaucoup plus de trous que de saillies et une feuille en matière plastique d'un deuxième type comportant beaucoup plus de saillies que de trous.

10. Corps de remplissage selon une des revendications 4 à 9, dans lequel une liaison par complémentarité de formes entre des éléments de liaison appariés est réalisée par application d'une force qui appuie de façon décentrée contre un élément de liaison participant à la liaison par complémentarité de formes.

11. Corps de remplissage selon une des revendications 4 à 9, dans lequel une liaison par complémentarité de formes entre des éléments de liaison appariés est réalisée par application d'une force qui appuie de l'intérieur contre un élément de liaison participant à la liaison par complémentarité de formes.

12. Corps de remplissage selon une des revendications 4 à 11, dans lequel chacune des feuilles en matière plastique est constituée d'un matériau thermoplastique.
